# EUROPÄISCHE PATENTANMELDUNG

(11) **EP 0 678 481 A2**
(43) Veröffentlichungstag der Anmeldung: **25.10.1995**
(21) Anmeldenummer: 95109973.8
(22) Anmeldetag: 16.08.1991
(51) Int. Cl.: C03B 23/09, C03B 23/11

(54) **Formfinger zur Formung eines Mündungsbereiches an einem Glasfläschchen**

(30) Priorität: 11.09.1990 DE 4028823
(62) Teilanmeldung aus: 91113745.3
(71) Anmelder: Schott Glaswerke, D-55122 Mainz (DE); Carl-Zeiss-Stiftung trading as SCHOTT GLASWERKE, D-55122 Mainz (DE)
(72) Erfinder: Männl, Reinhard, D-95666 Mitterteich (DE); Wolfrum, Alfons, D-95643 Tirschenreuth (DE); Neumeier, Franz, D-95659 Arzberg (DE)
(74) Vertreter: Fuchs, Luderschmidt & Partner Patentanwälte

(57) **Zusammenfassung**

Die Erfindung betrifft einen Formfinger für eine Vorrichtung zur Formung eines Mündungsbereiches an einem Glasfläschchen. Formfinger herkömmlicher Fläschchenformungsmaschinen haben eine zylindrische Form mit kreisförmigem Querschnitt. Der äußere Umfang eines solchen Formfingers entspricht dem Innenumfang des zu formenden Mündungsbereiches. Ein solcher Formfinger unterliegt einem hohen Verschleiß, wodurch sich das Mündungsprofil eines Fläschchens im Laufe einer Serie verändert. Mit dem neuen Formfinger soll der Verschleiß auf ein Minimum reduziert werden, so daß bessere Fertigungstoleranzen für die geformte Mündung möglich werden. Dies wird erreicht, indem man den Formfinger mit seitlichen Aussparungen herstellt, wobei ein Verhältnis von Querschnittsfläche zur Bogenlänge seines Kreisabschnittsbereich von ≧ 0,55 x r eingehalten wird. Diese Formfinger finden in allen Fläschchenmaschinen Anwendung, in denen aus einer Vielzahl von Glasrohren in einem Zyklus nach und nach Fläschchen durch Einrollen und Abschmelzen Rohrstücken hergestellt werden.

## Beschreibung

Die Erfindung betrifft einen Formfinger zum Unterstützen der Ausformung des Mündungsbereiches eines Fläschchens, dessen Mündungsbereich am offenen, wärmeerweichten Ende eines Glasrohres ausgebildet wird. Aus dem geformten Glasrohrende werden anschließend Fläschchen, wie Ampullen, Schnappdeckelgläser, Rollrandfläschchen etc. hergestellt.

Diese kleinen Fläschchen oder Ampullen werden aus Glasrohren in Fläschchenmaschinen hergestellt, in denen eine Vielzahl von Glasrohren um ihre eigene Längsachse gedreht gehalten und nach und nach einzelnen Formstationen zugeführt werden. An einer solchen Formstation wird auch der Mündungsbereich durch Einrollen des Glasrohrendes mittels einer oder mehrerer Formrollen gebildet.

Formfinger zur Formung des Mündungsbereiches eines Glasrohres sind bereits aus den DE-C-15 96 410, 17 96 100, 36 13 212 und der CA-C-581053 bekannt. Diese Formfinger haben sämtlich die Form eines Zylinders mit kreisförmigem Querschnitt. In einigen Fällen ist der Zylinder an der Kante abgerundet oder abgeschrägt. Diese Zylinder, deren Außenumfang dem Innenumfang des zu formenden Werkstücks entspricht, werden in das offene Ende des Glasrohres eingeführt und dienen als innere Abstützung für die Formrollen, die von außen den zu verformenden, wärmeerweichten Bereich des Glasrohres bearbeiten. Da bei der Formung des Glasrohres der Formfinger über längere Zeit in Kontakt mit dem wärmeerweichten Glas ist, muß der Formfinger aus einem hochwertigen, wärmebeständigen Material hergestellt werden, wobei trotzdem aufgrund der Einsatzbedingungen ein häufiger Wechsel des Formfingers notwendig ist, wobei dann jedesmal die Flaschenproduktion gestoppt werden muß.

Aufgabe der vorliegenden Erfindung ist es daher, einen Formfinger bereitzustellen, dessen spezielle Ausbildung den Verschleiß möglichst gering hält.

Diese Aufgabe wird durch einen Formfinger der eingangs beschriebenen Art grundsätzlich durch die kennzeichnenden Merkmale des Anspruchs 1 gelöst.

Es hat sich gezeigt, daß zur Erhöhung der Verschleißfestigkeit eines Formfingers zwei Faktoren beitragen, nämlich einerseits die Zeit, in der der Formfinger in Kontakt mit dem wärmeerweichten Glas ist, im Verhältnis zu der Zeit, in der der Formfinger abkühlen kann, und andererseits die Form des Formfingers bzw. dessen Halterung selbst.

So können durch eine spezielle Ausgestaltung des Formfingers oder der Halterung des Formfingers der Verschleiß und damit auftretende Ungenauigkeiten bei der Mündungsformung vermindert werden.

Ein erfindungsgemäßer Formfinger, der zum Innenformen eines Mündungsbereiches in ein offenes, wärmeerweichtes Ende eines Glasrohres, das von einer Formrolle eingerollt wird, geführt wird, zeichnet sich dadurch aus, daß er eine vom üblichen kreisförmigen Querschnitt derart abweichende Querschnittsfläche aufweist, die nur noch einen oder mehrere Kreisabschnittsbereiche aufweist, die in Kontakt mit dem Innenumfang des Mündungsbereiches kommen und den Innenradius der Mündung bestimmen, wobei aber die Querschnittsfläche des Formfingers insgesamt so groß gehalten wird, daß das Verhältnis der Querschnittsfläche zur Bogenlänge des (oder der) Kreisabschnittsbereich(e) ≧ 0,55 r. ist, wobei r der Radius des Kreisabschnittsbereiches ist. Dies bedeutet, daß der Formfinger, der nur mit seinem(n) Kreisabschnittsbereich(en) mit dem wärmeerweichten Glasrohrende in Kontakt kommt, eine verhältnismäßig größere Querschnittsfläche zur Ableitung der während dieses Kontaktes auf den Formfinger übertragenen Wärmemenge hat, als ein Kreis mit gleichem Radius bzw. ein entsprechendes tortenförmiges Kreissegment. Durch diese Maßnahme kann der erfindungsgemäße Formfinger die über seinen Kreisabschnittsbereich vom wärmeerweichten Glasrohrende übertragene Wärmemenge schneller an seine Halterung abführen als ein entsprechender zylindrischer Formfinger, wodurch beim erfindungsgemäßen Formfinger bei sonst gleichen Betriebsbedingungen nur eine geringere Erhitzung auftritt. Vorteilhaft ist, wenn die Querschnittsfläche des Formfingers nicht unter die halbe Fläche des über die Kreisabschnittsfläche(n) gelegten Vollkreises reduziert wird, d.h. wenn die Querschnittsfläche ≧ 0,5r² . π ist, damit noch genügend Masse zur Wärmeabführung überhaupt vorhanden ist. Auch soll der Kreisabschnittsbereich nicht zu klein sein, damit eine genügende Glättung des Innenumfangs des Mündungsbereiches gewährleistet ist. Vorteilhaft ist ein Kreisabschnittsbereich von 60° bis 190°, wobei vorzugsweise der Kreisabschnitt in einem Bereich von 100° bis 150° gewählt wird. Hat der Formfinger z.B. zwei einander gegenüberliegende Kreisabschnittsbereiche, so liegen diese vorzugsweise jeweils im Bereich 100° bis 150°.

Zur Abstützung des unteren Glasrandes des wärmeerweichten Glasrohrendes hat der Formfinger an seinem unteren Ende vorzugsweise eine Auflage, die eine kreisförmige Umfangsfläche hat und konzentrisch zu dem Formfinger angeordnet ist, wobei der Radius dieser Auflage größer ist als der Radius des Kreisabschnittsbereiches. Eine stufenförmig profilierte Formrolle wird bei einem solchen Formfinger dann so angesetzt, daß der kleinere Formrollenradius an der Umfangsfläche dieser Auflage ansetzt und dabei mit dem Profilteil mit größerem Radius gegen den Kreisabschnittsbereich einen im Querschnitt im wesentlichen rechteckigen Hohlraum begrenzt, in dem das wärmeerweichte Glasrohrende zu einem Rollrand oder Bördelrand der Fläschchenmündung geformt wird. Der Radius des Kreisabschnitts bestimmt dabei wieder den Innenradius der Mündung, der größere Radius der Formrolle den Außenradius des Fläschchenhalses und der kleinere Radius der Formrolle den Außenradius des Rollrandes.

Üblicherweise richtet sich der Radius des Kreisabschnittes also nach dem gewünschten Innenradius der Mündung. Für Spezialanwendungen können Formfinger mit einem Radius zwischen 2 mm und 20 mm eingesetzt werden.

In einer besonderen Ausführungsform kann die Auflage, auf der das Glasrohrende aufsitzt, eine zum Zentrum hin abfallende Oberfläche haben. Hierdurch wird am oberen Fläschchenrand eine konische Spiegelfläche geformt. Die abfallende Oberfläche kann in einem Winkel von z.B. 5° oder 7° ausgeführt werden.

Die Umfangsfläche der Auflage kann auch an dem Bereich, an dem die Formrolle ansetzt, eine Aussparung aufweisen, so daß der Radius der Auflage in diesem Bereich etwas verkleinert ist. Dies ermöglicht eine Verkleinerung des Außendurchmessers des Fläschchenrandes, da die Formscheibe hier näher an den Formfinger dringen kann.

Mit dem erfindungsgemäßen Formfinger lassen sich in dem zu formenden Mündungsbereich des Fläschchens auch Hinterschneidungen herstellen. Hierzu hat der obere Teil des Kreisabschnittsbereiches dann einen erweiterten vorstehenden Rand, der als Stufe oder als Schräge ausgebildet sein kann und entsprechend einen zweiten Kreisabschnittsbereich mit größerem Radius als der erste Kreisabschnittsbereich darstellt, wobei beide Kreisabschnittsbereiche konzentrisch angeordnet sind. Bei einem solchen Formfinger ist dann auch der hintere Bereich gegenüber einem Vollzylinder freigefräst, so daß der Formfinger nach vollendeter Formung zuerst etwas in radialer Richtung von der Kontaktstelle Kreisabschnittsbereich/Innenumfang der Mündung zurückgeschoben werden kann, um dann ohne Berührung der Mündung herausgezogen zu werden. Ein solcher Formfinger wird bevorzugt in Zusammenwirkung mit nur einer Formrolle eingesetzt, da bei der bisher allgemein üblichen Verwendung von zwei Formrollen zwei entsprechend ausgebildete gegeneinander verschiebbare Formfingerhälften verwendet werden müßten, die, damit sie gegeneinander zusammenschiebbar sind, eine nur sehr geringe Querschnittsfläche bezüglich eines entsprechenden Vollkreises aufweisen können, wodurch eine genügende Ableitung der Wärme nicht mehr in jedem Fall sicher gewährleistet ist.

Die oben beschriebenen Ausführungsformen des erfindungsgemäßen Formfingers sind insbesondere bei der Verwendung nur einer Formrolle mit Vorteil einsetzbar. Sollen zwei Formrollen um 180° am Glasrohr versetzt dieses einrollen, so ist der erfindungsgemäße Formfinger in einer D₂ₕ-Symmetrie (Symmetrie des Querschnitts) auszuführen, wobei zwei sich gegenüberliegende Kreisabschnittsbereiche dann den Formrollen zugeordnet sind. Insbesondere bei der Herstellung einer Mündung mit einem hinterschnittenen Bereich ist jedoch die Verwendung von nur einer Formrolle und ein Formfinger mit C₂ᵥ-Symmetrie besonders günstig, da dann keine aufwendigen Mittel zum Gegeneinanderschwenken oder Verschieben von zwei Formfingern in der Mündung notwendig sind.

Zur Kühlung kann der Formfinger im Betrieb mit Öl übersprüht werden, das praktisch über den ganzen Formfinger ablaufen kann und zweckmäßigerweise in einer direkt unter dem Formfinger liegenden Ölauffangwanne gesammelt und von dieser abgeleitet wird. Anstatt eines Ölablaufes über dem gesamten Formfinger kann es insbesondere bei der Verwendung von zum Zentrum des Formfingers hin abfallenden schrägen Oberflächen auch günstig sein, im mittleren Bereich der Auflage eine Ölablaufbohrung vorzusehen, die dann über eine vorzugsweise im wesentlichen waagerechte Bohrung mit der Ölauffangwanne in Verbindung steht. Eine solche Ölauffangwanne und gegebenenfalls entsprechende Bohrungen lassen sich prinzipiell bei allen Formfingern mit Erfolg einsetzen.

Zur weiteren Verbesserung des Formvorganges und Minderung des Verschleißes kann der Formfinger vorteilhaft auch mit etwas horizontalem Spiel ausgebildet sein bzw. mit einem solchen Spiel in das wärmeerweichte Glasrohrende eingefahren werden, wie es in der europäischen Patentanmeldung EP 91 113 745.3 beschrieben ist. Das horizontale Spiel erlaubt eine weitgehend freie Bewegung des Formfingers radial zur Längsachse des Glasrohres. Dies erreicht man z.B., indem der Formfinger auf eine Gelenklagerung gesetzt wird.

Auch in diesem Fall hat der Formfinger günstigerweise eine vom Vollzylinder abweichende Form. Aufgrund der Bewegungsfreiheit sollte der Querschnitt des Formfingers hier jedoch auch bei Verwendung von nur einer Formrolle eine Dₚₕ-Symmetrie (p = 2, 3, 4 ...), vorzugsweise eine D₂ₕ-Symmetrie oder aber in dem 180°-Bereich der Mündung, der mindestens 90 % vom Berührungspunkt mit der Formrolle entfernt ist, mindestens einen das Innere der Mündung abstützenden Kreisabschnittsbereich, haben, damit eine Zentrierung des Formfingers möglich ist. Zweckmäßigerweise hat der Formfinger die Form eines beidseitig abgeflachten Zylinders mit zwei verbleibenden Kreisabschnittsbereichen von vorzugsweise 100° bis 150°. Als besonders günstig haben sich Kreisabschnittsbereiche von ca. 135° erwiesen. Die oben und hier beschriebenen, vom Vollzylinder abweichenden Formfinger haben neben den besseren Wärmeableiteigenschaften noch den Vorteil, daß das Formöl, das oben auf den Formfinger aufgetropft wird, während der Formung der Mündung an den Freifräsungen besser ablaufen kann. Das zu formende Glas kann daher an den Kreisabschnittsbereichen besser anliegen.

Wie oben beschrieben wird der erfindungsgemäße Formfinger besonders vorteilhaft in der in der europäischen Patentanmeldung EP 91 113 745.3 beschriebenen Vorrichtung eingesetzt. In diesem Fall kann er aufgrund der längeren Abkühlzeit auch aus einem preiswerten, weniger hochtemperaturfesten Material wie z. B. Silberstahl (Werkstoffnummer nach deutschem Stahlschlüssel 1.2210) statt des bisher üblichen Tyrodur-Stahls (Werkstoffnummer 1.2842) bestehen.

Ausführungsbeispiele der Erfindung sind in den Zeichnungen dargestellt und werden im folgenden näher beschrieben.

Es zeigen
- Fig. 1: einen Schnitt durch einen erfindungsgemäßen Formfinger;
- Fig. 2: eine Seitenansicht eines erfindungsgemäßen Formfingers mit einer Auflage; und
- Fig. 3: einen Schnitt durch den Formfinger gemäß Figur 2 entlang der Linie IV-IV während eines Formprozesses.

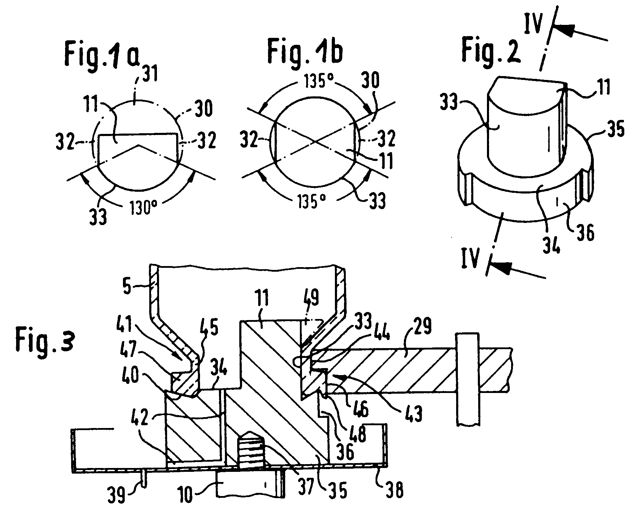

In Fig. 1a ist ein erfindungsgemäßer Formfinger dargestellt. Dieser Formfinger 11 ist ein Teil aus einer ursprünglich zylindrischen Form 30, an der ca. 40 % des hinteren Bereiches 31 und je ca. 7 % der seitlichen Bereiche 32 (die Prozentangaben beziehen sich auf den ursprünglichen Durchmesser der zylindrischen Form 30) abgefräst wurden. Hierdurch ist ein Zylinderausschnitt entstanden, wie er in Figur 1a im Querschnitt dargestellt ist. Dieser Formfinger 11 hat einen Kreisabschnittsbereich 33, der noch die ursprüngliche Aufgabe des Formfingers hat, nämlich die Glättung und Unterstützung (Formung) des Inneren der zu formenden Mündung.

Der Kreisabschnittsbereich 33 überdeckt einen Winkel von ca. 130°, an dem die Formrolle 29 ansetzen und formen kann. Entsprechend dem Winkel von 130° hat der Kreisabschnittsbereich 33 eine Bogenlänge von 2.r. π. 130°/360°, wobei r der Radius des Kreisabschnittsbereiches ist. An den übrigen Seiten des Formfingers 11 kann keine Formung mehr erfolgen, dieser Formfinger 11 ist daher nur zur Anwendung in Fläschchenmaschinen mit einer Formrolle je Formstation (wie z.B. in Figur 1 dargestellt) bestimmt.

Der vom Kreisabschnittsbereich 33 überdeckte Bereich von ca. 130° eines Vollzylinders richtet sich nach den konstruktiven Gegebenheiten einer jeweils verwendeten Fläschchenmaschine bzw. Formstation.

Soll eine Formung am Formfinger über 180° oder mehr möglich sein, so ist an einem Vollzylinder nur der hintere Bereich 31 abzunehmen. Normalerweise ist jedoch ein Kreisabschnittsbereich 33 von weniger als 180° ausreichend und auch wünschenswert, da durch die Abnahme des hinteren Bereichs 31 und der seitlichen Bereiche 32 der Querschnitt des Formfingers so verkleinert ist, daß er leicht und sogar ohne Berührung des Innenumfanges einer fertig geformten Mündung aus dieser herausgezogen werden kann.

Figur 1b zeigt einen Formfinger 11, dessen Querschnitt eine D₂ₕ-Symmetrie hat. Gegenüber der zylindrischen Form 30 sind nur die seitlichen Bereiche 32 freigefräst. Dieser Formfinger 11 hat zwei Kreisabschnittsbereiche 33 mit einem Winkel von jeweils ca. 135° und wird bei einer Formung mit zwei Formrollen oder bei einer (unten beschriebenen) beweglichen Lagerung des Formfingers verwendet.

Am unteren Ende des Formfingers 11 kann, wie in Figur 2 dargestellt, eine Auflage 34 für einen zu formenden Mündungsrand vorgesehen sein. Diese Auflage 34 hat im wesentlichen die Form einer zylindrischen Scheibe 35 mit größerem Durchmesser als die zylindrische Form 30 und ist konzentrisch zu dieser angeordnet. Die zylindrische Scheibe 35 hat unterhalb des Kreisabschnittsbereiches 33 eine Aussparung 36, die einen Freiraum für die Formrolle 29 bildet, so daß diese hier näher an den Formfinger 11 dringen kann, als es das Nennmaß des Rollrandaußendurchmessers eines zu formenden Fläschchens ist.

Eine solche Situation ist in Figur 3 dargestellt. Die zylindrische Scheibe 35 ist bei 37 (z.B. mittels einer Schraube) an einem Kolben 10 befestigt. Zwischen dem Kolben 10 und der zylindrischen Scheibe 35 ist eine Ölauffangwanne 38 angeordnet, die über den Formfinger 11 gesprühtes Formöl auffängt und über einen Abfluß 39 zurückleitet.

Die Auflage 34 hat eine zum Zentrum des Formfingers hin abfallende Oberfläche 40, die den oberen Rand einer Fläschchenmündung 41 formt. Die Anschrägung hat einen Winkel von 5° und richtet sich nach dem jeweiligen Verwendungszweck des herzustellenden Fläschchens.

Das Formöl kann über den gesamten Formfinger 11 und die zylindrische Scheibe 35 ablaufen, oder aber auch über Kanäle 42 durch die zylindrische Scheibe hindurch abgeleitet werden.

Während eines Formvorganges wird das gedrehte Glasrohr 5 mittels der Formrolle 29 an seinem Ende 25 gegen den Kreisabschnittsbereichs 33 des Formfingers 11 gedrückt. Die Formrolle 29 weist an ihrem Rand ein Profil 43 auf, dessen nach außen stehender Teil 44 das Glasrohrende 25 gegen den Kreisabschnittsbereich 33 drückt und dabei einen Fläschchenhals 45 formt. Vor einem nach innen stehenden Teil 46 des Profils 43 bildet sich dabei ein etwas dickerer Glaswulst, der in Kontakt mit dem Kreisabschnittsbereich 33 und der schrägen Oberfläche 40 zu einem Bördel- oder Rollrand 47 geformt wird. Bei diesem Formvorgang kann die Formrolle 29 im Bereich der Aussparung 36 etwas näher an den Formfinger 11 dringen, so daß ein kleiner Glasposten 48 in den durch die Aussparung 36 gebildeten freien Raum gedrückt wird. Hierdurch wird gleichzeitig das Nennmaß des Rollrandaußendurchmessers etwas kleiner. Durch das Drehen des Glasrohres 5 wird dieser kleine Glasposten 48 jedoch aus dem Bereich der Aussparung 36 herausgedreht und dabei auf der schrägen Oberfläche 40 glattgebügelt. Durch diese Maßnahme wird erreicht, daß auch bei leicht schwankenden Glasrohrstärken immer eine saubere Mündungsformung gewährleistet ist. Mit der Aussparung 36 wird außerdem erreicht, daß die Formrolle 29 nicht gegen den äußeren Rand der zylindrischen Scheibe 35 gedrückt wird, wobei die Lagerung oder Halterung entweder des Formfingers 11 oder der Formscheibe 29 beschädigt werden könnte.

Für besondere Ausgestaltungen einer Fläschchenmündung kann am oberen Ende des Formfingers 11 ein erweiterter Rand 49 oder Kragen vorgesehen sein, der in dem Fläschchenhals 45 eine Hinterschneidung formt. Dieser Formfinger 11 muß nach der Formung entweder radial versetzt oder schräg aus der fertig geformten Fläschchenmündung 41 herausgezogen werden. Ein solches Herausziehen des Formfingers ist auch sinnvoll, wenn kein erweiterter Rand 49 vorgesehen ist, da hierbei der Kreisabschnittsbereich 33 ohne Berührung der Innenwandung der Mündung aus dieser genommen wird.

Ein solches Herausziehen des Formfingers 11 ist nur mit einem Formfinger, wie er in den Figuren 1a, 2 und 3 dargestellt ist, möglich. Der bisher verwendete vollzylindrische Formfinger kann nur in Längsrichtung des Glasrohres aus der fertig geformten Mündung gezogen werden.

Um die vorteilhafte Gestalt des erfindungsgemäßen Formfingers zu erhalten, kann auch anders als dargestellt der hintere Bereich und die seitlichen Bereiche z.B. in der Art eines Ovals abgetragen werden. Dabei sollte eine möglichst große Querschnittsfläche des Formfingers bestehen bleiben, damit die am Kreisabschnittsbereich aufgenommene Wärme schnell abgeführt werden kann.

## Patentansprüche

1. Formfinger für eine Vorrichtung zum Formen eines Mündungsbereiches an einem offenen, wärmeerweichten Ende eines Glasrohres, gekennzeichnet durch, auf einen Querschnitt des Formfingers bezogen, mindestens einen Kreisabschnittsbereich (33), der in Kontakt mit einem Innenumfang des Mündungsbereiches kommt und den Innenradius der Mündung (41) bestimmt, und durch ein Verhältnis seiner Querschnittsfläche zur Bogenlänge seines/r Kreisabschnittsbereichs/e (33) von ≧ 0,55 * r, wobei r der Radius des Kreisabschnittsbereiches (33) ist.

2. Formfinger nach Anspruch 1, dadurch gekennzeichnet, daß seine Querschnittsfläche ≧ 0,5 r² * π ist.

3. Formfinger nach Anspruch 1 oder 2, dadurch gekennzeichnet, daß der Kreisabschnittsbereich (33) über 60° bis 190° eines Zylinders verläuft.

4. Formfinger nach Anspruch 3, dadurch gekennzeichnet, daß der Kreisabschnittsbereich (33) über 100° bis 150° verläuft.

5. Formfinger nach einem der Ansprüche 1 bis 4, dadurch gekennzeichnet, daß er eine zum Kreisabschnittsbereich (33) konzentrisch angeordnete zylindrische Scheibe (35) aufweist, die als Auflage (34) für das Glasrohrende (25) dient und die eine kreisförmige Umfangsfläche aufweist, deren Radius größer ist als der Radius des Kreisabschnittsbereiches (33).

6. Formfinger nach Anspruch 5, dadurch gekennzeichnet, daß die Auflage (34) eine zum Zentrum hin abfallende Oberfläche hat.

7. Formfinger nach Anspruch 5 oder 6, dadurch gekennzeichnet, daß die Umfangsfläche an dem der Formrolle (29) entgegengerichteten Bereich eine Aussparung (36) aufweist.

8. Formfinger nach einem der Ansprüche 1 bis 7, dadurch gekennzeichnet, daß er am oberen Ende seines Kreisabschnittsbereiches (33) einen nach außen stehenden Rand (49) aufweist.
